Europäisches Patentamt

European Patent Office

Office européen des brevets

(19)

(11) **EP 1 538 770 A2**

(12) **EUROPEAN PATENT APPLICATION**

(43) Date of publication:
**08.06.2005 Bulletin 2005/23**

(51) Int Cl.$^7$: **H04L 1/00**

(21) Application number: **04028729.4**

(22) Date of filing: **03.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **04.12.2003 KR 2003087779**

(71) Applicant: **Samsung Electronics Co., Ltd.**
**Suwon-si, Gyeonggi-do (KR)**

(72) Inventor: **Park, Su-Won**
**c/o Samsung Electronics Co., Ltd.**
**Suwon-si Gyeonggi-do (KR)**

(74) Representative: **Lang, Johannes, Dipl.-Ing.**
**Bardehle Pagenberg Dost Altenburg Geissler,**
**Postfach 86 06 20**
**81633 München (DE)**

(54) **Rate matching method and apparatus for multiplexing channels having different transmission time intervals in a mobile communication system**

(57)    A method and apparatus for multiplexing a first channel and a second channel having different Transmission Time Intervals (TTIs) for a first service and a second service and transmitting a plurality of symbols in a mobile communication system providing the first service and the second service. Some of the features include performing coding on the first service and the second service based on TTIs for corresponding services; performing interleaving based on TTIs of the respective services; sequentially transmitting the channel-interleaved symbols for the first service and the channel-interleaved symbols for the second service, considering the number of symbols to be transmitted through one frame; and multiplexing the first channel for the first service and the second channel for the second service on a unit frame basis.

FIG.3

## Description

## BACKGROUND OF THE INVENTION

### Field of the Invention

The present invention relates generally to rate matching of channel-coded signals in a mobile communication system, and in particular, to a rate matching method and apparatus for multiplexing channels having different Transmission Time Intervals (TTIs).

### Description of the Related Art

Generally, in wireless communication systems such as Integrated Services Digital Network (ISDN) system, digital cellular system, Wideband Code Division Multiple Access (W-CDMA) system, and CDMA2000 system, source user data is channel-coded with error correction codes before being transmitted in order to improve reliability of transmission data. Typical codes used for channel coding include convolutional codes, and linear block codes for which a single decoder is used. Recently, in addition to the foregoing typical codes, turbo codes are popularly used.

In order to match the number of coded data bits to the number of bits actually output with a radio frame, puncturing and repetition are performed on specific bits among the coded data bits. The puncturing and repetition is called "rate matching."

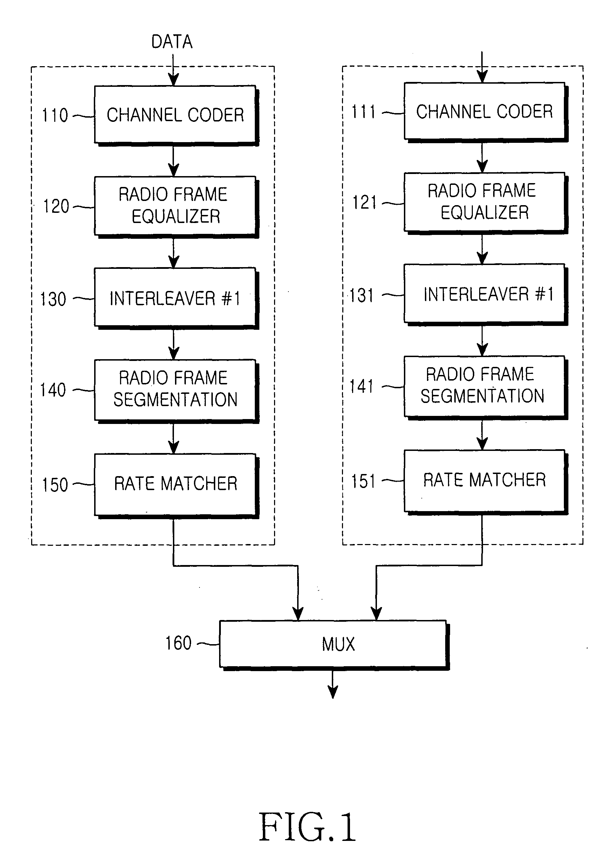

FIG. 1 is a block diagram illustrating a structure of a UMTS (Universal Mobile Telecommunication System) uplink transmitter. Referring to FIG. 1, transmission data is input to a channel coder 110,111 on a TTI-by-TTI basis. The TTI can be determined according to quality-of-service (QoS) of the transmission data. A data rate or a TTI can be determined according to the QoS, and the TTI can be set to 10 ms, 20 ms, 40 ms and 80 ms. The channel coder 110,111 receives data on a frame-by-frame basis, codes the received data according to a predetermined coding rate, and outputs coded bits. A radio frame equalizer 120,121 generates $F_i$ consecutive radio frames each having the same number of bits as the number of the output coded bits. The number of bits allocable to one frame is expressed as

$$T_i = F_i * N_i$$
$$N_i = \text{floor} \{E_i/F_i\} \quad \ldots\ldots\ldots (1)$$

where 'i' denotes a unique transport channel number, $F_i$ denotes the number of radio frames that can be generated for one TTI in an $i^{th}$ transport channel, $N_i$ denotes the number of bits included in each of radio frames generated for one TTI in an $i^{th}$ transport channel, and $E_i$ denotes the number of bits included in one TTI in an $i^{th}$

transport channel. A first interleaver 130,131 interleaves the bits output from the radio frame equalizer 120,121, and an output of the first interleaver 130,131 is input to a radio frame segmentation block 140,141. The radio frame segmentation block 140,141 allocates the interleaved bits to $F_i$ radio frames. If a transport channel over which the bits are transmitted has a TTI of 10 ms or longer, the radio frame segmentation block 140,141 segments the radio frame according to the TTI. When the number of bits allocated to the segmented radio frame is smaller than the number of bits allocable in the TTI, a rate matcher 150,151 performs repetition to match the bits in number. In contrast, when the number of bits allocated to the radio frame is larger than the number of bits allocable in the TTI, the rate matcher 150,151 punctures specific bits to match the bits in number. That is, for rate matching, the rate matcher 150,151 performs puncturing or repetition to the number of bits that can be transmitted for one TTI. The foregoing elements can be separately provided for each service, as shown by dotted-line blocks.

A multiplexer (MUX) 160 receives radio frames finally rate-matched for respective services, and multiplexes the radio frames. The multiplexed radio frames are transmitted over a physical channel in a physical channel processing process.

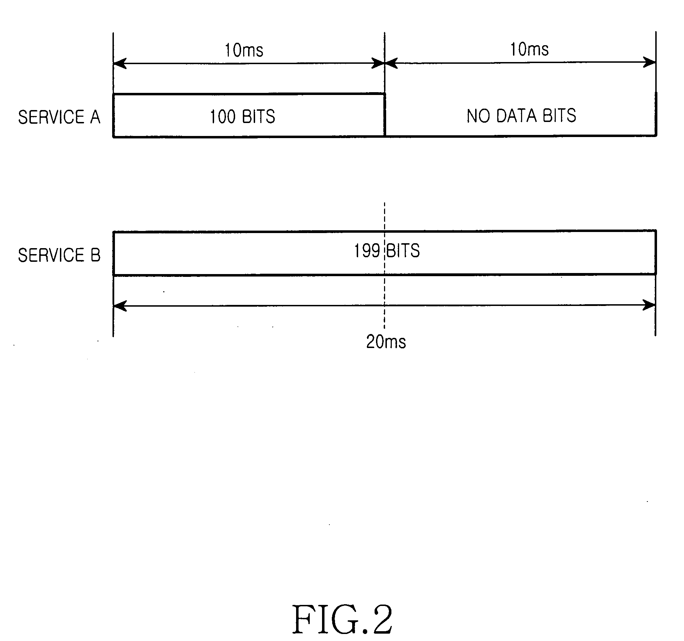

FIG. 2 is a diagram illustrating a process of performing rate matching according to the prior art. With reference to FIG. 2, a description will be made of a process in which a service A and a service B are multiplexed with one transport channel. It is assumed herein that the service A is provided on a 10-ms TTI basis, and the service B is provided on a 20-ms TTI basis. For example, the service A transmits 100-bit data for an initial 10-ms TTI and transmits no data for the next 10-ms TTI, and the service B transmits 199-bit data for a 20-ms TTI. The 100 bits and the 199 bits for respective TTIs are obtained by counting the numbers of bits output from the channel coders. Therefore, when the 10-ms TTI-based service A and the 20-ms TTI-based service B are multiplexed and transmitted over a physical channel, the total number of bits per 10 ms is 150 bits.

When a 10-ms TTI transport channel and a 20-ms TTI transport channel are multiplexed as described above, 10 ms which is the minimum TTI is defined as a unit frame, and the 20-ms TTI transport channel is segmented by the 10 ms which is the unit frame, and transmitted twice. That is, the 20-ms TTI transport channel is multiplexed with the 10-ms TTI transport channel before being transmitted.

A description will now be made of a method for multiplexing the service A and the service B in a first 10-ms frame.

For the service A, the channel coder 110 codes received transmission data according to a predetermined coding rate, and outputs the coded bits to the radio frame equalizer 120. The radio frame equalizer 120 compares a 10-ms TTI for transmitting data for the service A with the defined unit frame. Here, a TTI for the service A is equal to the unit frame, i.e., 10-ms TTI. Because the number of bits allocable for one TTI is 100, additional bit padding is not performed. The first interleaver 130 interleaves the received 100-bit data. The radio frame segmentation block 140 allocates the interleaved 100-bit data to a 10-ms frame. The rate matcher 150 performs Rate Matching Attribute (RMA) on the 100-bit data allocated to the 10-ms frame. That is, the rate matcher 150 performs puncturing and repetition on the received data in order to match the total number of bits allocable to one frame, as the service A and the service B are multiplexed before being transmitted. A detailed description of the rate matching operation will be given below.

For the service B, a channel coder 111 codes 199-bit transmission data received for a 20-ms TTI. A radio frame equalizer 121 compares a TTI for the service B with the defined unit frame. Because the TTI for the service B is not equal to the unit frame, the radio frame equalizer 121 generates a frame for supporting the service B with the unit frame considering Equation (1). That is, the radio frame equalizer 121 segments the 20-ms TTI into 10-ms unit frames. Therefore, according to Equation (1), the number $E_i$ of bits included in the 20-ms TTI is 199, $F_i$ is 2, and $N_i$ is 100. In order to equally include 100 bits in the unit frames, the radio frame equalizer 121 additionally pads 1 bit. The 200-bit data obtained by performing the 1-bit padding is output to the first interleaver 131. The first interleaver 131 interleaves the 200-bit data. A radio frame segmentation block 141 segments the 20-ms TTI into 100-bit unit frames, i.e., 10-ms unit radio frames, and sequentially outputs 200-bit data. A rate matcher 151 performs puncturing and repetition on the 100-bit data received by the 10-ms unit frame, using Rate Matching Attribute. That is, the rate matcher 151 performs puncturing and repetition on the received data in order to match the total number of bits allocable to one frame, as the service A and the service B are multiplexed before being transmitted.

In other words, the total number of bits output from the rate matcher 150 and the rate matcher 151 is 200. However, the total number of bits that should be transmitted for the 10-ms unit frame is 150. Therefore, the rate matchers 150 and 151 should puncture 25 bits, respectively. That is, the rate matcher 150 punctures 25 bits in the 100-bit data for the service A and outputs the result to the multiplexer 160, and the rate matcher 151 punctures 25 bits in the 100-bit data of a first radio frame for the service B and outputs the result to the multiplexer 160.

The multiplexer 160 receives 75-bit data for the service A and a 75-bit first radio frame for the service B, multiplexes the 150-bit data for the 10-ms unit frame, and transmits the multiplexing result over a physical channel.

Next, a description will be made of a method for multiplexing the service A and the service B in a second 10-ms frame.

For the service A, because there is no input data for a second 10-ms TTI, the channel coder 110 to the rate matcher 150 perform no operation for the second 10-ms TTI.

However, for the service B, the channel coder 111 to the radio frame segmentation block 141 perform the same signal processing as that performed on the first frame.

The rate matcher 151 performs rate matching on 100 bits in the second 10-ms frame. Because the total number of bits received for the 10-ms unit frame is 100 and the total number of bits that should be transmitted over a 10-ms physical channel is 150, the rate matcher 151 repeats 50 bits according to Rate Matching Attribute, outputting 150-bit data.

That is, for the second 10-ms TTI, the multiplexer 160 outputs the 0-bit data for the service A and the 150-bit data for the service B.

When a plurality of transport channels having different TTIs are multiplexed as described above, a minimum TTI is defined as a unit frame and, in the case of a transport channel having a TTI longer than the unit frame, a data sequence is segmented into unit frames. The segmented radio frames are adjusted through a padding process such that they have the same number of bits. The radio frames segmented in this manner are sequentially subjected to rate matching. However, the foregoing rate matching method has the following problems.

Referring to FIG. 2, the service A transmits only 75 (=100-25+0) bits in 100-bit data for a total of 20 ms, and the service B transmits only 174 (=75+99) bits in 199-bit data for 20 ms. That is, the service B should additionally transmit 1 data bit padded by the radio frame equalizer 121 and 50 data bits repeated for a second 10-ms TTI.

Therefore, for the service A and the service B, 50 data bits are punctured and 51 data bits are repeated unnecessarily for a total of 20 ms before being transmitted.

It is generally known that to improve performance of a mobile communication system it is desirable that the system receives as many information bits as possible and decodes the received information bits. However, the conventional rate matching method punctures an unnecessarily large number of information bits and pads unnecessary bits. That is, the conventional rate matching method punctures effective data and repeats the same data, causing a reduction in system performance.

## SUMMARY OF THE INVENTION

It is, therefore, an object of the present invention to provide an apparatus and method for multiplexing channels having different Transmission Time Intervals (TTIs) before transmission.

It is another object of the present invention to provide a rate matching apparatus and method for supporting services having different TTIs using a predetermined bandwidth in a mobile communication system.

To achieve the above and other objects, an embodiment of the invention provides a method for multiplexing a first channel and a second channel having different Transmission Time Intervals (TTIs) for a first service and a second service and transmitting the multiplexed channels through one frame in a mobile communication system providing the first service and the second service. The method comprises the steps of comparing a TTI for the first service with a TTI for the second service, defining a minimum TTI as a unit frame for which the first channel and the second channel are multiplexed and transmitted, and matching symbols for the first service and symbols for the second service according to the maximum number of symbols allocatable to the unit frame.

To achieve the above and other objects, another embodiment of the invention provides an apparatus for multiplexing a first channel and a second channel having different Transmission Time Intervals (TTIs) for a first service and a second service and transmitting a plurality of symbols in a mobile communication system providing the first service and the second service. The apparatus comprises channel coders for performing coding on the first service and the second service based on TTIs for corresponding services, channel interleavers for performing interleaving based on TTIs of the respective services, rate matchers for sequentially transmitting the channel-interleaved symbols for the first service and the channel-interleaved symbols for the second service, considering the number of symbols to be transmitted through one frame, and a multiplexer for multiplexing the first channel for the first service and the second channel for the second service on a unit frame basis.

**BRIEF DESCRIPTION OF THE DRAWINGS**

The above and other objects, features and advantages of the present invention will become more apparent from the following detailed description when taken in conjunction with the accompanying drawings in which:

FIG. 1 is a block diagram schematically illustrating a structure of an uplink transmitter in a mobile communication system;
FIG. 2 is a diagram illustrating a process of performing rate matching on a frame-by-frame basis according to the prior art;
FIG. 3 is a block diagram schematically illustrating a structure of an uplink transmitter in a mobile communication system according to an embodiment of the present invention; and
FIG. 4 is a diagram illustrating a process of performing rate matching on a frame-by-frame basis according to an embodiment of the present invention.

**DETAILED DESCRIPTION OF THE EMBODIMENTS OF THE INVENTION**

An embodiment of the present invention will now be described in detail with reference to the annexed drawings. In the following description, a detailed description of known functions and configurations incorporated herein has been omitted for conciseness.

A 3rd generation mobile communication system supporting a high-speed multimedia service uses a scheme of multiplexing channels having different Transmission Time Intervals (TTIs) and transmitting the multiplexed channels over a single physical channel. The TTI corresponds to a channel coding or channel interleaving unit, and this corresponds to a multiple of a frame which is a data transmission unit.

Therefore, examplory embodiments of the present invention propose an efficient rate matching (RM) apparatus and method for multiplexing and transmitting channels having different TTIs in a mobile communication system. That is, according to examplory embodiments of the present invention, efficient rate transmission, especially when several transport channels having different TTIs are multiplexed before being transmitted, may be performed, which may thereby facilitate optimization of channel decoding performance at a receiver.

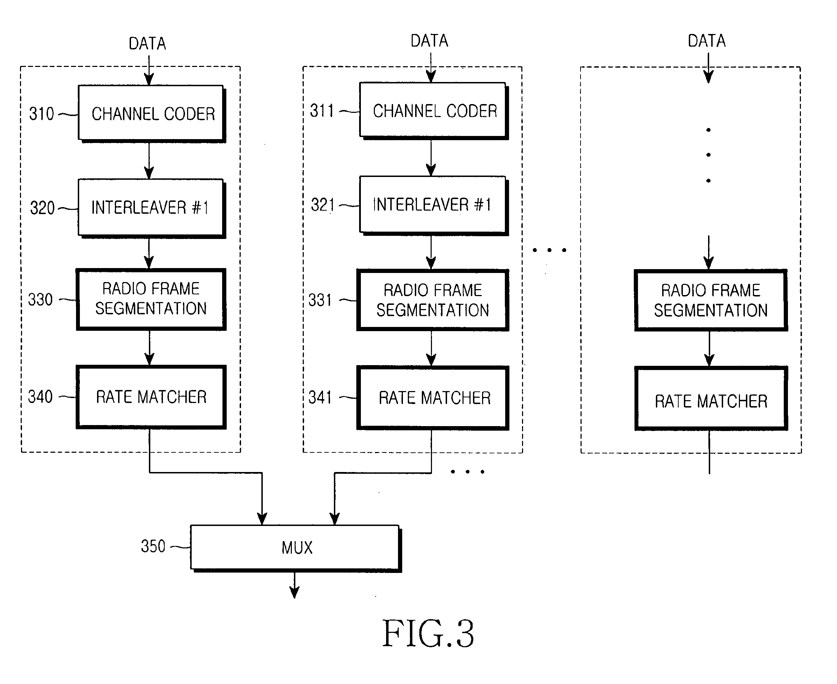

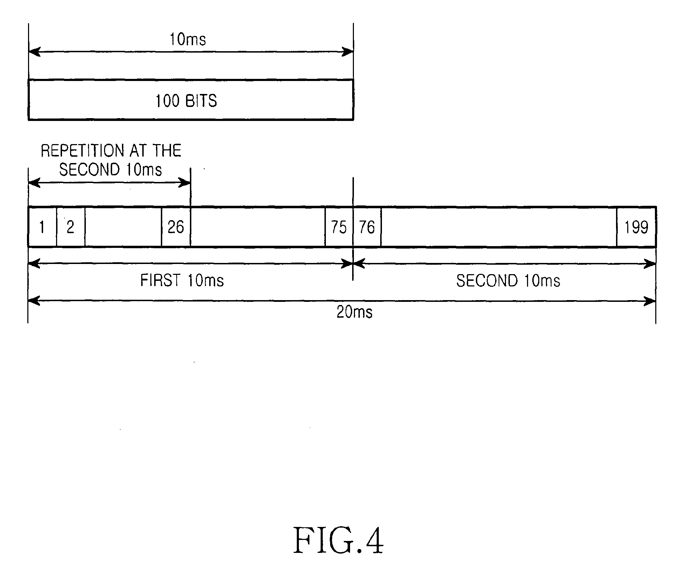

FIG. 3 is a block diagram schematically illustrating a structure of an uplink transmitter in a mobile communication system according to an embodiment of the present invention. FIG. 4 is a diagram illustrating a process of performing rate matching on a frame-by-frame basis according to an embodiment of the present invention.

With reference to FIGs. 3 and 4, a description will be made of a process of multiplexing a service A and a service B with a single transport channel according to an embodiment of the present invention. For illustrative purposes, it is assumed herein that the service A is provided on a 10-ms TTI basis, and the service B is provided on a 20-ms TTI basis. Also, it is assumed that the service A transmits 100-bit data for an initial 10-ms TTI and transmits no data for the next 10-ms TTI, and that the service B transmits 199-bit data for a 20-ms TTI. The 100 bits and the 199 bits for respective TTIs are obtained by counting the numbers of bits output from corresponding channel coders. In addition, it is assumed that when the 10-ms TTI-based service A and the 20-ms TTI-based service B are multiplexed and transmitted over a physical channel, the total number of bits per 10 ms is 150 bits.

When a 10-ms TTI transport channel and a 20-ms TTI transport channel are multiplexed as described above, the 10-ms transport channel which is the minimum TTI is defined as a unit frame, and the 20-ms TTI transport channel is segmented by the 10 ms which is the unit frame, and then multiplexed with the 10-ms TTI transport channel.

First Embodiment

A description will now be made of a method for multiplexing the service A and the service B in a first 10-ms TTI.

For the service A, a channel coder 310 codes receives 100-bit data, and outputs the coded data to a first interleaver 320. The first interleaver 320 interleaves the coded 100-bit data. A radio frame segmentation block 330 generates radio frames in the defined unit frame in order to transmit 100-bit data for 100-ms TTI. Because a TTI for the service A is equal to the 10-ms unit frame, the radio frame segmentation block 330 outputs the interleaved 100-bit data to a rate matcher 340 without performing any separate operation. The rate matcher 340 performs puncturing and repetition on the 100-bit data received by the unit frame using Rate Matching Attribute (RMA). A detailed description of the rate matching operation will be given below.

For the service B, a channel coder 311 codes 199-bit transmission data for a 20-ms TTI. A first interleaver 321 interleaves the 199-bit data. A radio frame segmentation block 331 segments the 20-ms TTI into 10-ms unit frames. That is, the radio frame segmentation block 331 generates two 10-ms radio frames and sequentially outputs the 199-bit data using the generated 10-ms radio frames. The number $E_i$ of bits included in the 20-ms TTI for the service B is 199, and when the 20-ms TTI is segmented into 10-ms unit frames, $F_i$ becomes 2. $N_i$ is determined according to a method proposed in an embodiment of the present invention, and the number $N_i$ of bits included in each of the segmented 2 radio frames can be different according to radio frame. A rate matcher 341 performs puncturing and repetition on the sequentially input radio frames using Rate Matching Attribute. A detailed description will now be made of operations of the radio frame segmentation blocks 330 and 331 and the rate matchers 340 and 341 according to an embodiment of the present invention.

For first 10 ms, for the service A, because a TTI for the service A is equal to the unit frame, the radio frame segmentation block 330 outputs the received 100-bit data to the rate matcher 340 without performing any separate operation. The rate matcher 340 receives the 100-bit data.

For first 10 ms, for the service B, 199-bit data interleaved by the 20 ms through the first interleaver 321 is input to the radio frame segmentation block 331. The radio frame segmentation block 331 segments the interleaved 199-bit data into 10-ms unit frames.

In order to determine the number of bits to be output for the service B for first 10 ms, the radio frame segmentation block 331 estimates a rate matching result for the case where 199 bits are segmented in the

size of $N_i=floor\{199/2\}$ in accordance with $N_i==floor\{E_i/F_i\}$ of Equation (1). That is, the sum of output bits of the rate matcher 340 and the output bits of the rate matcher 341 should be 150 bits. Therefore, the rate matcher 340 and the rate matcher 341 should puncture 25 bits, respectively. Depending on the decision result, the radio frame segmentation block 331 outputs only 75 bits to the rate matcher 341 for rate matching for first 10 ms.

In other words, the rate matcher 340 for the service A punctures 25 bits in 100-bit data, and the rate matcher 341 for the service B outputs received 75 bits without performing any separate operation.

However, in a second 10-ms frame, because the service A has no data, the channel coder 310 to the rate matcher 340 are disabled. That is, the rate matcher 340 receives 0-bit data and outputs 0-bit data.

However, for second 10 ms, for the service B, the radio frame segmentation block 331 outputs the remaining 124 bits to the rate matcher 341. In this case, 0 bit is input to the rate matcher 340, and 124 bits are input to the rate matcher 341, so that the total number of bits allocated to one physical channel is 124 bits. However, because the total number of bits that should be output from the rate matchers 340 and 341 is 150, the rate matcher 340 for the service A outputs 0 bit and the rate matcher 341 for the service B repeats 26 bits among the received 124 bits and outputs a total of 150 bits.

As described above, according to an embodiment of the present invention, data for respective services is punctured considering the number of bits allocable to one unit frame, thereby preventing unnecessary puncturing. In addition, according to an embodiment of the present invention prevents meaningless data repetition related to the puncturing may be prevented.

Second Embodiment

A description will now be made of another embodiment of the present invention. In order to determine the number of bits to be output for the service B for first 10 ms, the radio frame segmentation block 331 segments the 199 bits in the size of $N_i=floor\{199/2\}$ in accordance with $N_i=floor\{E_i/F_i\}$ of Equation (1). That is, 100 bits are input to the rate matcher 340 and 100 bits are input to the rate matcher 341, so that a total of 200 bits are input to the rate matchers 340 and 341. Because the total number of bits that should be output from the rate matchers 340 and 341 is 150, the rate matchers 340 and 341 should puncture 25 bits, respectively. For this, the rate matcher 340 punctures 25 bits and outputs 75 bits, and the rate matcher 341 outputs only 75 bits of a $1^{st}$ bit to a $75^{th}$ bit in a 100-bit sequence and does not output the remaining 25 bits of a $76^{th}$ bit to $100^{th}$ bit. That is, the rate matcher 341 outputs first 75 symbols instead of conventionally puncturing 25 bits among 100 bits. This operation is called "TTI shortening."

For a second 10-ms frame, because the service A has no data, the channel coder 310 to the rate matcher 340 are disabled. That is, the rate matcher 340 receives 0-bit data and outputs 0-bit data.

For the second 10-ms frame, for the service B, the 199 bits interleaved by the 20 ms through the first interleaver 321 are input to the radio frame segmentation block 331. The radio frame segmentation block 331 segments the interleaved 199 bits.

Because the radio frame segmentation block 331 has output 100 bits for the service B for the first 10 ms, the radio frame segmentation block 331 outputs the remaining 99 bits to the rate matcher 341 for the service B for the second 10 ms. In this case, it can be considered that 0 bit is input to the rate matcher 340 and a total of 124 bits are input to the rate matcher 341. Because the total number of bits that should be output from the rate matchers is 150, the rate matcher 340 outputs 0 bit and the rate matcher 341 repeats 26 bits among received 124 bits and outputs a total of 150 bits. That is, the rate matcher 341 performs rate matching on a total of 124 bits of $76^{th}$ bit to $198^{th}$ bits following the remaining bits transmitted for the previous 10 ms among the 199 bits, by sequentially accessing the bits to be transmitted for respective frames, considering the Rate Matching Attribute. For the service B that transmits 199 bits for a 20-ms TTI, the rate matcher 341 performs rate matching the data bits following the bits transmitted for the previous 10-ms TTI. Such an operation is called "TTI extension."

For reference, when repetition should be used in rate matching, an embodiment of the present invention proposes a method for performing rate matching by performing repetition on 26 bits of a $1^{st}$ bit to a $26^{th}$ bit among a total of 199 bits in the 20-ms TTI.

As described above, for channels having different TTIs, a channel coder performs coding according to a TTI for a corresponding service and delivers coded symbols to a channel interleaver. The channel interleaver performs interleaving according to the TTI for the corresponding service. Therefore, the rate matcher sequentially transmits the interleaved symbols considering the number of symbols that can be transmitted through a predetermined frame. That is, the rate matcher sequentially cyclically outputs the interleaved symbols according to the number of bits that can be transmitted through the Rate Matching Attribute.

That is, an embodiment of the present invention proposes a method for sequentially transmitting as many channel-coded symbols that were channel-interleaved according to the TTI as the number of symbols required for respective frames. Therefore, an embodiment of the present invention determines whether the number of symbols to be output through the channel coder is large or small at an end point of the TTI, to minimize unnecessary puncturing or repetition which may occur, thereby contributing to an increase in channel decoding performance.

As can be understood from the foregoing description, examplory embodiments of the present invention may have the following possible, but not required advantages. When multiplexing channels having different TTIs, according to examplory embodiments of the present invention rate matching is performed on a TTI basis so that punctured or repeated symbols are uniformly distributed over the TTI, thereby improving channel decoding performance. The improvement of channel decoding performance reduces transmission power required for achieving the same QoS, thereby improving performance of the mobile communication system.

While the invention has been shown and described with reference to a certain examplory embodiments thereof, it will be understood by those skilled in the art that various changes in form and details may be made therein without departing from the spirit and scope of the invention as defined by the appended claims.

## Claims

1. A method for multiplexing a first channel and a second channel having different Transmission Time Intervals (TTIs) for a first service and a second service, the method comprising:

   comparing a TTI for the first service with a TTI for the second service;
   defining a minimum TTI as a unit frame for which the first channel and
   the second channel are multiplexed based on the comparing; and
   matching symbols for the first service and symbols for the second service according to a maximum number of symbols allocatable to the unit frame.

2. The method of claim 1, wherein the matching comprises:

   performing channel interleaving based on a first TTI for the first service; and
   sequentially outputting as many channel-interleaved symbols for the first service as the number of symbols allocatable to the unit frame, considering the number of symbols for the second service.

3. The method of claim 1, wherein the matching comprises:

   performing channel interleaving based on a second TTI for the second service; and
   sequentially outputting as many channel-interleaved symbols for the second service as the number of symbols allocatable to the unit frame, considering the number of symbols for the first service.

**4.** The method of claim 3, wherein the unit frame is equal in length to the TTI for the first service.

**5.** An apparatus for multiplexing a first channel and a second channel having different Transmission Time Intervals (TTIs) for a first service and a second service and transmitting a plurality of symbols in a mobile communication system providing the first service and the second service, the apparatus comprising:

   a first channel coder for performing coding on the first service based on a TTI for the first service;
   a second channel coder for performing coding on the second service based on a TTI for the second service;
   a first channel interleaver for performing interleaving based on the TTI for the first service;
   a second channel interleaver for performing interleaving based on the TTI for the second service;
   a first rate matcher for sequentially transmitting channel-interleaved symbols for the first service;
   a second rate matcher for sequentially transmitting the channel-interleaved symbols for the second service; and
   a multiplexer for multiplexing the first channel for the first service and the second channel for the second service on a unit frame basis;

   wherein at least one of the first matcher and the second matcher is configured to perform the sequential transmitting taking into consideration the number of symbols to be transmitted through one frame.

**6.** The apparatus of claim 5, wherein the first channel interleaver channel-interleaves the first channel for the first service based on a first TTI.

**7.** The apparatus of claim 6, wherein the first rate matcher sequentially transmits as many channel-interleaved symbols for the first service as the number of symbols required for each frame.

**8.** The apparatus of claim 5, wherein the second channel interleaver channel-interleaves the second channel for the second service based on a second TTI.

**9.** The apparatus of claim 8, wherein the second rate matcher sequentially transmits as many channel-interleaved symbols for the second service as the number of symbols required for each frame.

**10.** The method of claim 1 further comprising transmitting the first and second channels which have been multiplexed through one frame in a mobile communication system providing the first service and the second service.

DATA

| | |
|---|---|
| 110 | CHANNEL CODER |
| 120 | RADIO FRAME EQUALIZER |
| 130 | INTERLEAVER #1 |
| 140 | RADIO FRAME SEGMENTATION |
| 150 | RATE MATCHER |

| | |
|---|---|
| 111 | CHANNEL CODER |
| 121 | RADIO FRAME EQUALIZER |
| 131 | INTERLEAVER #1 |
| 141 | RADIO FRAME SEGMENTATION |
| 151 | RATE MATCHER |

160 — MUX

# FIG.1

FIG.2

DATA

DATA

DATA

310 — CHANNEL CODER

311 — CHANNEL CODER

320 — INTERLEAVER #1

321 — INTERLEAVER #1

330 — RADIO FRAME SEGMENTATION

331 — RADIO FRAME SEGMENTATION

RADIO FRAME SEGMENTATION

340 — RATE MATCHER

341 — RATE MATCHER

RATE MATCHER

350 — MUX

FIG.3

FIG.4